# EUROPÄISCHE PATENTSCHRIFT

(11) **EP 0 590 441 B1**
(45) Veröffentlichungstag und Bekanntmachung des Hinweises auf die Patenterteilung: **16.04.1997**
(21) Anmeldenummer: 93115000.7
(22) Anmeldetag: 17.09.1993
(51) Int. Cl.: B62D 25/10, E05D 15/40, E05F 1/10

(54) **Haube für einen Mobilbagger**
Hood for a tractor excavator
Capot pour pelle excavatrice mobile

(30) Priorität: 30.09.1992 DE 4232698
(43) Veröffentlichungstag der Anmeldung: 06.04.1994
(73) Patentinhaber: Dr.Ing.h.c. F. Porsche Aktiengesellschaft, D-70435 Stuttgart (DE)
(72) Erfinder: Kircher, Günter, D-75233 Tiefenbronn (DE); Küsters, Heinz-Peter, D-71665 Vaihingen (DE)

(56) Entgegenhaltungen:
- FR-A- 1 131 079
- US-A- 4 263 978
- US-A- 4 312 418
- US-A- 4 566 552
- PRODUCT ENGINEERING 8. Juni 1970 Seiten 100 - 101 CHIRONIS 'UNIQUE LINKAGE PRODUCES PRECISE STRAIGHT-LINE MOTION'

## Beschreibung

Die Erfindung bezieht sich auf eine Haube für einen Mobilbagger, nach dem Oberbegriff des Anspruchs 1.

Zum Verschwenken von Hauben an Fahrzeugen sind Hebelanordnungen bekannt (DE-PS 915781) die ein Öffnen und Schließen eines Hohlraumes über die Haube im Fahrzeugaufbau bewirken.

Aufgabe der Erfindung ist es, eine Haube für einen Mobilbagger zu schaffen, die zum Verschwenken über die Hebelanordnung eine präzise abgestimmte Bewegung auf einem bestimmten Schwenkbereich durchführt.

Diese Aufgabe wird erfindungsgemäß durch die kennzeichnenden Merkmale des Anspruchs 1 gelöst.
Weitere Vorteilhafte Merkmale beinhalten die Unteransprüche.

Die mit der Erfindung hauptsachlich erzielten Vorteile bestehen darin, daß die im Stirnbereich abgesetzte Haube beim Verschwenken frei von der Fahrerkabine und vom abzudeckenden Kraftstofftank bei einer Bewegung angeordnet ist. Denn die eine Stirnwand der Haube ist in einem Bereich in einem Spalt zwischen der Fahrerkabine und einem Hydraulikölbehälter und die weitere anschließende Stirnwand ist einen Kraftstoffbehälter abdeckend, angeordnet.

Damit einerseits beim Verschwenken eine untere Haubenkante der Stirnwand sich nicht in dem Spalt verkeilt und andererseits die weitere Haubenkante der anderen Stirnwand nicht gegen den Kraftstoffbehälter stößt, erfolgt in einem ersten Schwenkbereich der Haube eine Gradführung, der sich eine bogenförmige Schwenkbewegung der Haube bzw. der Haubenkante anschließt.

Zur Erzielung diesbezüglicher geführter Schwenkbewegungen ist eine spezielle Hebelanordnung vorgesehen, die aus zwei äußeren Seitenhebeln und einem dazwischen angeordneten Mittenhebel besteht, der mit einer Gasfeder verbunden ist. Die Hebel bilden insgesamt ein Gelenkviereck, wobei die Haube die Koppel darstellt.

Die Seitenhebel sind unmittelbar benachbart der Haubeninnenfläche und oberhalb des Hydraulikölbehälters angeordnet und mit einem abgebogenen hinteren Ende an einem Lagerbock des Fahrzeugaufbaus angelegt. Der Mittenhebel erstreckt sich über die Länge der Seitenhebel hinaus und ist in einem Lagerbock hinter den Lagerböcken der Seitenhebel gehalten. Zwischen den Lagerböcken der Seitenhebel und dem Lagerbock des Mittenhebels ist die Gasfeder am Fahrzeugaufbau abgestützt.

Die Gasfeder ist in der Weise ausgelegt, daß im ersten Schwenkbereich die Haube selbsttätig anhebt. In einem Zwischenschwenkbereich wird mit Handkraft die Mittellage des Schwerpunktes über den Drehpunkt des Mittelhebels am Fahrzeugaufbau überwunden. Beim Endschwenkbereich unterstützt die Gasfeder die Haubenbewegung so weit, daß ein langsames, gedämpftes Absinken der Haube über das Fahrzeugheck erfolgt.

Ein Ausführungsbeispiel der Erfindung ist in der Zeichnung dargestellt und wird im folgenden näher beschrieben.

Es zeigt
Fig. 1 eine schematische Seitenansicht des Mobilbaggers mit Fahrerkabine und Haube,
Fig. 2 eine schematische Draufsicht zur Fig. 1 mit der Hebelanordnung,

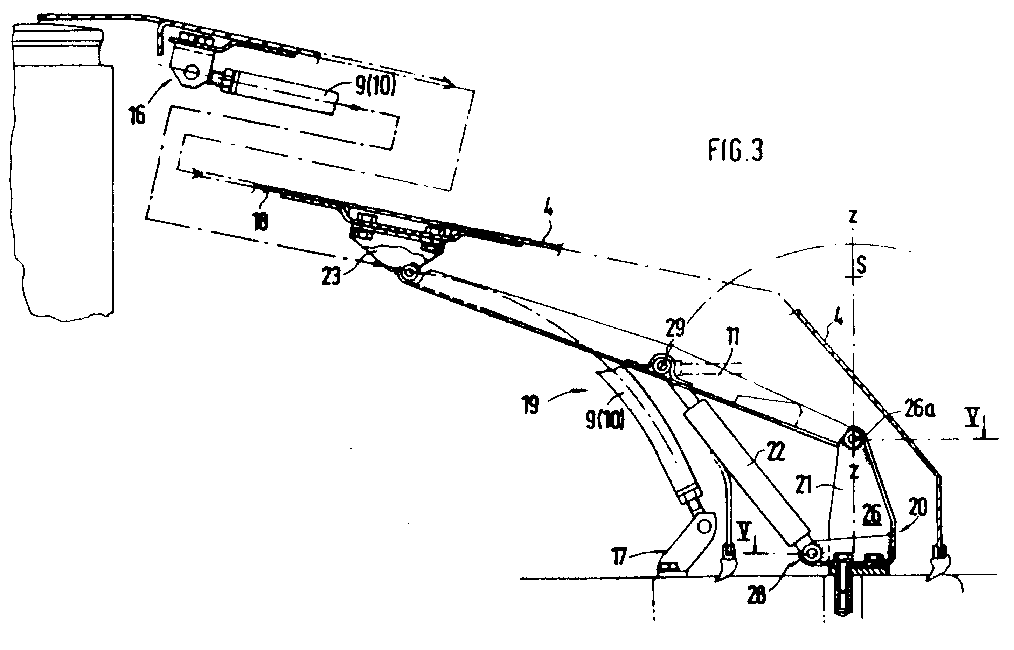

Fig. 3 eine Seitenansicht der Hebelanordnung,

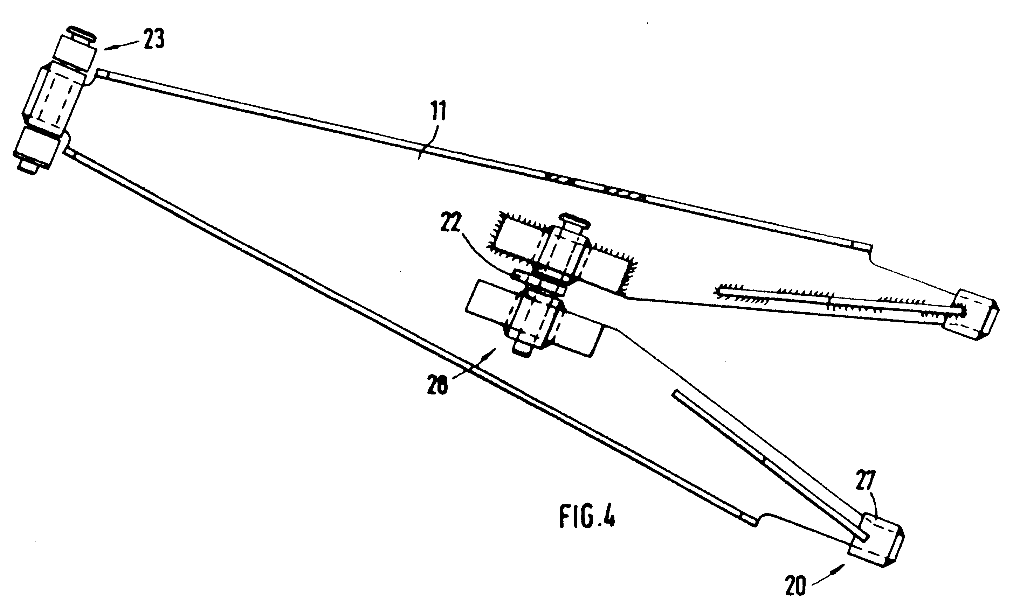

Fig. 4 eine Draufsicht auf den Mittelhebel gemäß Fig. 3 und

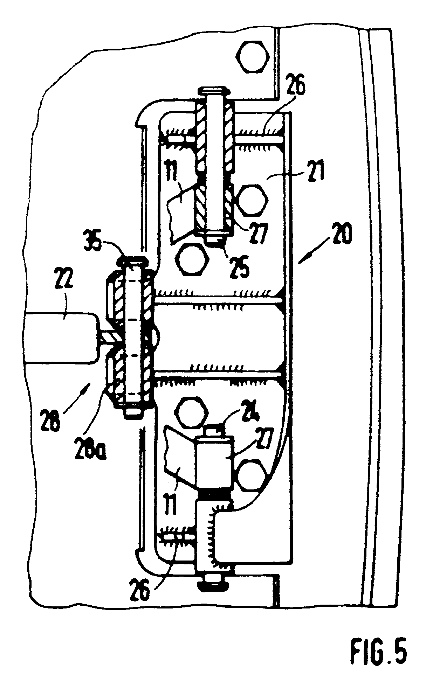

Fig. 5 einen Schnitt durch einen gemeinsamen Lagerbock am Fahrzeugaufbau nach der Linie V-V der Fig. 1 für eine Gasfeder und den Mittenhebel.

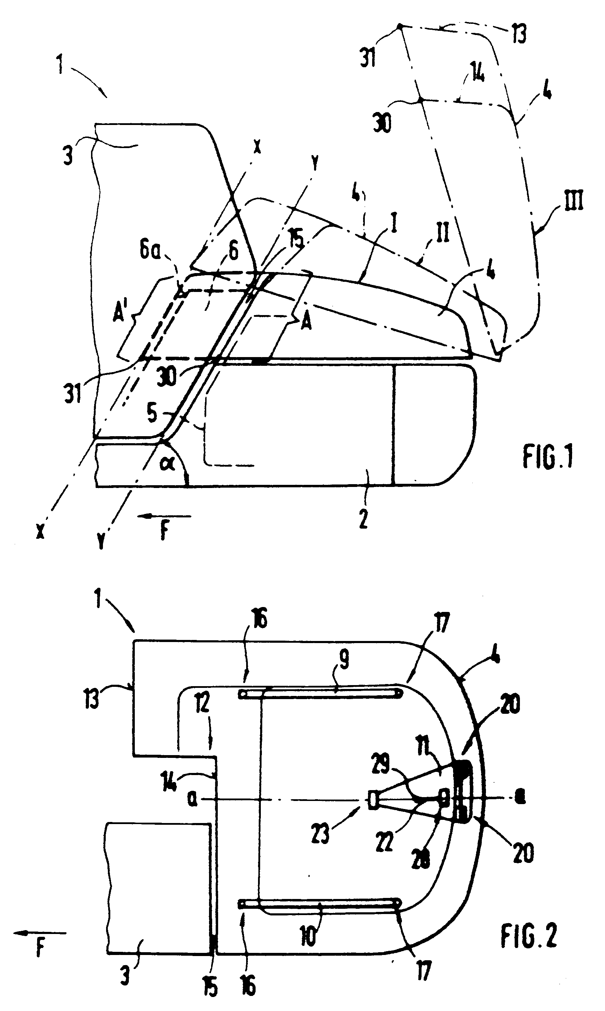

In Fig. 1 schematisch dargestellt, weist ein Mobilbagger 1 einen Fahrzeugaufbau, bestehend aus einem Grundkörper 2, einer Fahrerkabine 3, und einer Haube 4 auf. Dieses schließt einen Raum im Grundkörper 2 ab, der u.a. einen Hydraulikölbehälter 5 und einen Kraftstoffbehälter 6 aufnimmt.

Die Haube 4 ist über eine Hebel anordnung, bestehend aus zwei Seitenhebel 9 und 10, sowie einen Mittelhebel 11, am Grundkörper 2 des Fahrzeugaufbaus angelenkt. Die Seitenhebel 9 und 10 bilden mit dem Mittenhebel 11 und der Haube 4 als Koppel ein Gelenkviereck.

Die Haube 4 weist an ihrer, dem Fahrerhaus 3 zugerichteten Stirnwand eine Absetzung 12 in der Weise auf, daß die eine Stirnwand 13 der einen Seite des Baggers 1 - in bezug auf die Fahrtrichtung F - vor einer weiteren Stirnwand 14 der anderen Seite angeordnet ist. Diese Ausbildung der Stirnwände 13 und 14 ist bedingt durch die Anordnung des Hydraulikölbehälters 5 und des Kraftstoffbehälters 6 im Grundkörper 2.

Der Ölbehälter 5 ist, wie Fig. 1 näher zeigt, unmittelbar benachbart und hinter der Fahrerkabine 3 angeordnet. In einem verbleibenden Spalt 15 ist die eine Stirnwand 14 im geschlossenen Zustand der Haube 4 gelegen. Die weitere Stirnwand 13 übergreift gleichzeitig den Kraftstoffbehälter 6. Die Stirnwände 13 und 14 verlaufen in einer schrägen Ebene x-x und y-y, die parallel zueinander angeordnet, und unter einem spitzen Winkel α zum Grundkörper 2 eingestellt sind.

Die beiden Seitenhebel 9 und 10 sind parallel zueinander angeordnet und einerseits an der Haube 4 an einem Lagerbock 16 und andererseits am Grundkörper 2 in einem Lagerbock 17 schwenkbar gehalten. Die Seitenhebel 9 und 10 erstrecken sich nahe der inneren Haubenkontur 18 oberhalb des Hydraulikbehälters 5 und sind zum Lagerbock 17 hin in einem Bereich 19 abgebogen.

Der Mittenhebel 11 ist in einer Konsole 20, die einen gemeinsamen Lagerbock 21 mit dem Mittenhebel 11 und der Gasfeder 22 bildet, schwenkbar gehalten und an der Haube 4 über einen Lagerbock 23 angelenkt, wobei die Gasfeder 22 am Mittenhebel im Lager 29 abgestützt ist.

Der Lagerbock 21 umfaßt achsgleich gegenüberstehende Aufnahmebolzen 24, 25, welche in vertikalen Stegen 26 gehalten sind und Lager 27 für den Mittenhebel 11 bilden. Die Gasfeder 22 ist in einer Lagerung 28 gehalten, die unterhalb der Lagerbolzen 24, 25 angeordnet ist.

Wie in Fig. 1 anhand der in drei Stellungen I, II, III gezeigten Haube dargestellt, sind über die Hebelanordnung Seitenhebel 9, 10, Mittenhebel 11 und Koppel (Haube 4) gezielte Schwenkbewegungen der Haube 4 zum Öffnen und Schließen möglich.

Die eine untere Begrenzungskante 30 der Stirnwand 14 ist in dem Spalt 15 gelegen, wobei die weitere untere Begrenzungskante 31 außerhalb, d.h. vor dem Kraftstoffbehälter 6, liegt. Ein Verschwenken der Haube 4 muß in der Weise erfolgen, daß die Begrenzungskante 30 nicht an der Fahrerkabine 3 und die Begrenzungskante 31 nicht an der Vorderwand 6a des Kraftstoffbehälters 6 anstößt. Hierzu sind die Hebel 9, 10 und 11 in der Weise ausgelegt, daß in einem Schwenkbereich A und A' die Begrenzungskante 30 eine nahezu geradlinige Schwenkbewegung durchführt und eine bogenförmige Schwenkbewegung nachfolgt. Beim Schließen sind die Schwenkbewegungen der Haube 4 entsprechend.

Die Gasfeder 22 ist im Zusammenspiel mit der Hebelanordnung in der Weise zur Haube 4 angelehnt, daß in einem ersten Schwenkbereich A die Haube 4 selbsttätig anhebbar ist. In einem anschließenden Zwischenschwenkbereich erfolgt eine manuelle Anhebung bzw. Verschwenkung der Haube 4 bis zur Mittellage, d.h. wenn der Schwerpunkt S der Haube 4 über dem Drehpunkt 26a des Mittenhebels 11 steht. Danach erfolgt ein Endschwenkbereich, bei der die Gasfeder 22 ein Absinken der Haube 4 über das Fahrzeugheck abdämpft.

## Patentansprüche

1. Mobilbagger mit einer Fahrerkabine (3) und einer in Fahrtrichtung (F) dahinter angeordneten Haube (4) zur Abdeckung eines Behälters (6), wobei die Haube (4) mittels einer Hebelanordnung verschwenkbar gehalten ist, dadurch gekennzeichnet, daß eine der Fahrerkabine (3) zugerichtete erste vorragende Stirnwand (13) zu einer zweiten zurückgesetzten Stirnwand (14) eine Absetzung (12) besitzt und beide Stirnwände (13, 14) einen Verlauf entlang von unter einem spitzen Winkel (α) zum Aufbau verlaufenden schrägen Ebenen (X-X und Y-Y) aufweisen, die etwa parallel zueinander angeordnet sind und daß außenliegende Seitenhebel (9, 10) und einen dazwischen angeordneten Mittenhebel (11) der Hebelanordnung ein Gelenkviereck mit der Haube (4) bilden, wobei die beiden Seitenhebel (9, 10) parallel zueinander angeordnet sind und daß das der Haube abgekehrte untere Ende in einem Lagerbock (17) angelenkt ist und der dazwischenliegende Mittenhebel (11) etwa in einer Ebene mit dem obenliegenden Abschnitt des außenliegenden Hebels (9, 10) verläuft und beabstandet zum Lagerbock (17) der außenliegenden Hebel (9, 10) in einem weiteren Lagerbock (20) angelenkt ist und daß untere Begrenzungskanten (30, 31) der Stirnwände (13, 14) beim Verschwenken im sich überdeckenden Bereich der Fahrerkabine (3) und einem Behälter (6) innerhalb eines Spaltes (15) sowie entlang einer Vorderwand (6a) des Behälters (6) auf einer geraden Strecke (A) entlang der Ebenen (X-X und Y-Y) bewegbar sind.

2. Mobilbagger nach Anspruch 1, dadurch gekennzeichnet, daß der Mittenhebel (11) mit einer Gasfeder (22) verbunden ist, die vor dem Lager des Mittenhebels (11) am Fahrzeugaufbau schwenkbar abgestützt ist und welche die Haube (4) zum Verschwenken kraftunterstützend bis zu einer Position hält, bei der der Haubenschwerpunkt (S) in einer gleichen senkrechten Ebene (z-z) mit dem Lagermittelpunkt (26a) des Mittenhebels (11) steht.

3. Mobilbagger nach den Ansprüchen 1 oder 2, dadurch gekennzeichnet, daß die Gasfeder (22) zwischen den Lagerböcken (19) der Seitenhebel (9, 10) und einem Lagerbock (21) des Mittenhebels (11) am Fahrzeugaufbau gehalten ist und ein Lager (28) in einer senkrechten Mittenlängsebene (a-a) des Mittenhebels (11) einnimmt.

4. Mobilbagger nach den Ansprüchen 1, 2 oder 3, dadurch gekennzeichnet, daß die Gasfeder (22) derart dimensioniert und am Fahrzeugaufbau sowie an der Haube (4) angelenkt ist, daß in einem ersten Schwenkbereich (A, A') die Haube (4) selbsttätig anhebbar ist, in einem Zwischenschwenkbereich eine manuelle Verschwenkung bis zur Mittellage des Schwerpunktes (S) über den Drehpunkt (26a) des Mittenhebels (11) erfolgt und in einem Endschwenkbereich die Feder (22) ein Absinken der Haube (4) über das Fahrzeugheck dämpft.

5. Mobilbagger nach einem oder mehreren der vorhergehenden Ansprüche, dadurch gekennzeichnet, daß der Lagerbock (21) für die Gasfeder (22) und den Mittenhebel (11) eine gemeinsame Konsole (20) umfaßt, die achsgleich gegenüberstehende Aufnahmebolzen (24 und 25) für die mit Abstand zueinander angeordneten Lagerungen (27) für den Mittenhebel (11) umfaßt und zwischen diesen beiden Lagerungen (27) die Gasfeder (22) auf einem von der Konsole (20) gehaltenen Zapfen (35), der in zwei Lagerbacken (28a) abgestützt ist, schwenkbar gehalten wird.

## Claims

1. A movable excavator with a driver's cab (3) and a hood (4) arranged therebehind in the direction of travel (**F**) for covering a container (6), the hood (4) being held pivotably by means of a lever arrangement, **characterized in that** a first projecting end wall (13) facing the driver's cab (3) has an offset (12) with respect to a second end wall (14) set back, and the two end walls (13, 14) extend along oblique planes (**X-X** and **Y-Y**) extending at an acute angle (α) to the body and arranged substantially parallel to each other, and lateral levers (9, 10) - situated on the outside - and a middle lever (11) - situated therebetween - of the lever arrangement form a four-bar linkage with the hood (4), wherein the two lateral levers (9, 10) are arranged parallel to each other, and the lower end remote from the hood is articulated in a bearing support (17), and the middle lever (11) situated therebetween extends substantially in one plane with the overlying portion of the lever[s] (9, 10) situated on the outside and is articulated in a further bearing support (20) at a distance from the bearing support (17) of the levers (9, 10) on the outside, and lower boundary edges (30, 31) of the end walls (13, 14) are movable on a straight path (**A**) along the planes (**X-X** and **Y-Y**) during pivoting in the overlapping area of the driver's cab (3) and a container (6) inside a gap (15) and along a front wall (6a) of the container (6).

2. A movable excavator according to Claim 1, **characterized in that** the middle lever (11) is connected to a gas spring (22) which is pivotably supported on the vehicle body in front of the bearing of the middle lever (11) and which for pivoting purposes holds the hood (4) with power assistance as far as a position in which the centre of gravity (**S**) of the hood is in the same vertical plane (**z-z**) as the bearing centre (26a) of the middle lever (11).

3. A movable excavator according to Claim 1 or 2, **characterized in that** the gas spring (22) is held on the vehicle body between the bearing supports (19) of the lateral levers (9, 10) and a bearing support (21) of the middle lever (11) and occupies a bearing (28) in a vertical median longitudinal plane (**a-a**) of the middle lever (11).

4. A movable excavator according to Claim 1, 2 or 3, **characterized in that** the gas spring (22) is dimensioned in such a way and is articulated to the vehicle body and to the hood (4) in such a way that in a first pivoting area (**A, A'**) the hood (4) can be raised automatically, in an intermediate pivoting area manual pivoting is performed as far as the middle position of the centre of gravity (**S**) about the fulcrum (26a) of the middle lever (11), and in a final pivoting area the spring (22) damps a lowering of the hood (4) over the tail of the vehicle.

5. A movable excavator according to one or more of the preceding Claims, **characterized in that** the bearing support (21) for the gas spring (22) and the middle lever (11) comprises a common bracket (20) comprising receiving pins (24 and 25) coaxially opposite each other for the mutually spaced mountings (27) for the middle lever (11), and between the said two mountings (27) the gas spring (22) is held pivotably on a pin (35) held by the bracket (20) and supported in two bearing jaws (28a).

## Revendications

1. Excavatrice mobile, avec une cabine de conduite (3) et un capot (4), disposé derrière celle-ci dans la direction de roulage (F), destiné à recouvrir un réservoir (6), le capot (4) étant maintenu pivotant au moyen d'un dispositif à levier, caractérisée en ce qu'une première paroi frontale (13) faisant saillie, tournée vers la cabine de conduite (3), comporte, vers une deuxième paroi frontale (14) en retrait, un décrochement (12), et les deux parois frontales (13, 14) présentant une allure, le long de plans (X-X et Y-Y), courant sous un angle aigu (α) par rapport à la structure, disposés à peu près parallèlement l'un à l'autre, en ce que des leviers latéraux (9, 10) placés extérieurement et un levier médian (11) disposé entre eux, et appartenant au dispositif à levier, constituent un quadrilatère articulé avec le capot (4), les deux leviers latéraux (9, 10) étant disposés parallèlement l'un a l'autre et en ce que l'extrémité inférieure, opposée au capot, est articulée dans un bloc palier (17) et le levier médian (11), placé en position intermédiaire, court à peu près dans le plan dans lequel se trouvent le tronçon supérieur du levier (9, 10) extérieur, et est articulé à distance du bloc palier (17) des leviers extérieurs (9, 10), dans un bloc palier (20) supplémentaire, et en ce que des arêtes de limitation inférieure (30, 31) des parois frontales (13, 14) sont déplaçables, lors du pivotement, dans une zone de chevauchant entre la cabine de conduite (3) et un réservoir (6), dans les limites d'un l'intervalle (15), ainsi que le long d'une paroi avant (6a) du réservoir (6), en suivant un trajet A rectiligne le long de plans (X-X et Y-Y).

2. Excavatrice mobile selon la revendication 1, caractérisée en ce que le levier médian (11) et relié à un ressort à gaz (22), qui est soutenu à pivotement par le palier du levier médian (11) monté sur la structure du véhicule et qui maintient le capot (1) en l'assistant avec une force, au pivotement, jusqu'a une position dans laquelle le centre de gravité (S) du capot est placé dans le même plan perpendiculaire (Z-Z) que le centre de tourillonnement (26a) du levier médian (11).

3. Excavatrice mobile selon la revendication 1 ou 2, caractérisée en ce que le ressort à gaz (22) est maintenu sur la structure du véhicule entre les blocs paliers (19) des leviers latéraux (9, 10) et un bloc palier (21) du levier médian (11) et reçoit un palier (28) placé dans un plan longitudinal médian vertical (a-a) du levier médian (11).

4. Excavatrice mobile selon les revendications 1, 2 ou 3, caractérisée en ce que le ressort à gaz (22) est dimensionné et articulé sur la structure du véhicule, ainsi que sur le capot (4), de manière que, dans une première plage de pivotement (A, A'), le capot (4) puisse être levé automatiquement, que, dans une deuxième plage intermédiaire de pivotement, un pivotement manuel s'effectue jusqu'à la position médiane du centre de gravité (S) sur le centre de rotation (26a) du levier médian (11), et que, dans une plage finale de pivotement, le ressort (22) amortisse la descente du capot (4) sur l'arrière du véhicule.

5. Excavatrice mobile selon l'une ou plusieurs des revendications précédentes, caractérisée en ce que le bloc palier (21) comprend pour le ressort à gaz (22) et le levier médian (1) une console (20) commune qui comprend des axes de support (24 et 25) coaxiaux et opposés pour les paliers de rotation (27) disposés distants l'un de l'autre et destinés au levier médian (11) et, entre ces deux paliers de rotation (27), le ressort à gaz (22) est maintenu pivotant sur un tourillon (35), qui est maintenu par la console (20) et soutenu dans deux mâchoires de paliers (28a).
